# EUROPEAN PATENT SPECIFICATION

(11) **EP 0 311 277 B1**
(45) Date of publication and mention of the grant of the patent: **18.01.1995**
(21) Application number: 88308804.9
(22) Date of filing: 22.09.1988
(51) Int. Cl.: B64C 11/40

(54) **Propeller blade systems**
Luftschraubenblattanlage
Dispositif pour pale d'hélice

(30) Priority: 03.10.1987 GB 8723247
(43) Date of publication of application: 12.04.1989
(73) Proprietor: Dowty Rotol Limited, Gloucester GL2 9QH (GB)
(72) Inventor: Waddleton, David, Cheltenham , Glos. GL51 7HB (GB)
(74) Representative: Hogg, Jeffery Keith

(56) References cited:
- GB-A- 2 180 892
- GB-A- 2 185 951

## Description

This invention relates to propeller blade systems and, in particular, a blade pitch control system for use therewith.

Presently employed blade pitch control systems incorporate hydraulic mechanical governor valves in order to ensure a high degree of system integrity, and separate valves to enable for feathering and unfeathering of the system. This means that these systems are mechanically safe, and therefore highly unlikely to fail.

The systems do however carry the drawback that because of their inherent nature of design they tend to be very bulky and weighty. With aircraft this means that space and weight are used up, leading to a higher fuel consumption and therefore a more expensive operational requirement.

The present invention is concerned with reducing the weight and bulk of the system whilst providing, or substantially so, a similar degree of integrity, and thereby reliability.

GB 2180892A discloses a blade pitch control system for use with a propeller system having one or more propellers including a constant speed valve and an overspeed valve and in which the operation of the constant speed valve, but not the overspeed valve, is controlled by computer means. In the event of a malfunction, such as an engine failure, there is the possibility of the propeller blades being maintained at an undesirable pitch angle.

US 3002 568 also discloses a multi-propeller blade pitch control system which comprises a constant speed valve and an overspeed valve. This control system operates automatically to set the blade pitch to a fully feathered position under engine failure conditions, so as to reduce drag to a minimum, the propeller blades not then rotating.

The present invention provides an improved blade pitch control system characterised in that both the constant speed valve and overspeed valve are controlled by computer means, and the propeller blades are automatically set to a non-fully feathered, minimum drag position in which the propeller rotates in the airflow so as to provide minimum drag characteristics in the event of a malfunction.

The overspeed valve may be a hydraulic mechanical valve i.e. a mechanical governor valve.

The constant speed valve and the overspeed valve, are preferably servo valves, and, most preferably, two stage servo valves.

Further, the servo valves are preferably electrically operated two stage servo valves.

The computer means may be an analogue computer system. However, preferably, the computer means is a digital means and most preferably a microprocessor.

Preferably, the propeller blade pitch control system further comprises a blade pitch control valve (beta valve). Any suitable type of beta valve may be used with this invention, and the use of a particular beta valve shall not be construed as limiting the scope of the invention.

During normal operation of the blade pitch control system, the system may be set to feather and unfeather by means of the constant speed valve.

Two examples of the invention will now be described, by way of example. with reference to the accompanying drawings, in which:
- Figure 1: shows a schematic diagram of a first blade pitch control system, having a minimum automatic drag feature and feather and unfeather features in accordance with the invention; and
- Figure 2: shows an alternative arrangement for the system as shown in Figure 1.

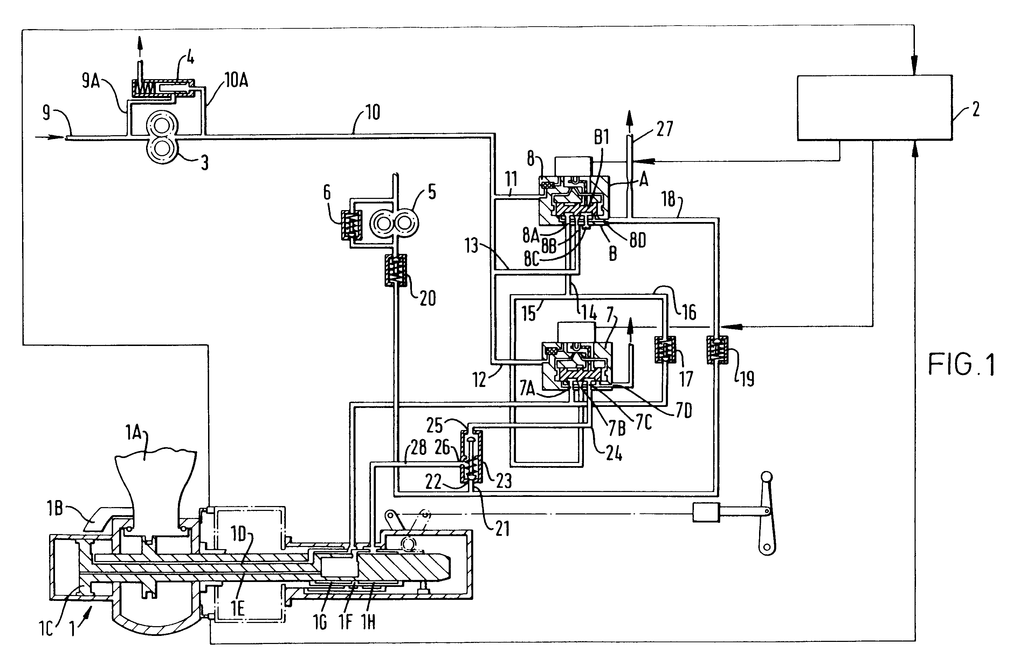

Now referring to Figure 1 a blade pitch control system comprises:
- a beta valve assembly 1,
- a microprocessor 2,
- a first high pressure gear pump 3 having a pressure relief valve 4,
- a second gear pump 5 having a pressure relief valve 6,
- a constant speed two stage servo valve 7, and
- an overspeed two stage servo valve 8.

The beta valve assembly 1 which controls the pitch of propellers 1A having counterweights 1B comprises:
- a first valve member 1C having a first passageway 1D and a second passageway 1E; and
- a second valve member 1F having co-operating first and second passageways 1G and 1H respectively.

The first passageways 1D and 1G co-operate to connect fluid to the assembly in such a way as to drive the pitch fine and the second passageways 1E and 1H co-operate to connect fluid to the assembly so as to drive the pitch coarse.

Both of the servo valves 7, 8 have a first stage A, and a second stage B which includes a spool member B1, and four ports 7A - 7D and 8A - 8D respectively.

The high pressure gear pump 3 has a fluid feed line 9 and a fluid outlet line 10. A pressure relief valve 4 is bridged, by means of lines 9A and 10A, across the gear pump to vent the system in cases of excessive pressure build up in the system.

The line 10 is connected to the first stages of both servo valves 7, 8 by means of branch lines 11, 12 respectively. Further, a branch line 13 connects to the port 8B of the overspeed two stage servo valve 8 to provide the blade pitch control system with a supply of high pressure fluid necessary to operate the beta valve assembly 1.

The port 8A of the overspeed servo valve 8 is connected to the port 7B and the port 7A of the constant speed servo valve 7 and thereby the fine side of the beta valve assembly 1 by means of line 14 which divides into lines 15 and 16.

In practice, the line 15 connects the overspeed servo valve 8 port 8A to the constant speed servo valve 7 port 7B and, the line 16 connects the port 8A of the overspeed servo valve 8 to port 7A of the constant speed servo valve 7 and to the fine side of the beta valve assembly 1.

A non return valve 17 is provided in the line 16 between the line 14 and the port 7A of the constant speed servo-valve 7 to prevent fluid flow from the line 14 to the port 7A and the fine side of the beta valve assembly 1.

The port 8C of the overspeed servo valve is a dummy port.

The port 8D of the overspeed servo valve 8 has a line 18 connected thereto which is connected to the output side of the second gear pump 5. The second gear pump is fed from a reserve tank (not shown).

The pressure relief valve 6 is bridged across the pump 5 to prevent excessive pressure building up in the output side line of the pump 5 prior to the non return valve 20. Further, the line 18 is provided with two non return valves 19 and 20, and is branched at a point between the two non return valves 19, 20 by a line 21 which connects to a port 22 of a shuttle valve 23.

The non return valve 19 prevents fluid flowing to port 8D from the gear pump 5, or the shuttle valve 23, whilst the non return valve 20 prevents fluid flow from port 8D or the shuttle valve 23 to the gear pump 5.

At a point between the port 8D of the overspeed servo valve 8 and the non return valve 19 the line 18 is provided with a restricted drain line 27.

The port 7C of the constant speed servo valve 7 is connected by a line 24 to a port 25 of the shuttle valve 23, whilst a line 28 interconnects the coarse side of the beta valve assembly 1 to a port 26 of the shuttle valve 23.

Port 7D of the constant speed servo valve is connected to drain.

The shuttle valve 23 is biased by mechanical means so that in normal operation the port 25 is in communication with the port 26 and the port 22 is closed.

The microprocessor 2 (the propeller electronic controller) is fed with feedback signals from the propeller system which relate the speed and phase of the propeller, and information concerning the R.P.M. and phase selection of the pilot. With this information the microprocessor 2 controls the setting of, and the operation of, the overspeed servo valve 8 and the constant speed servo valve 7, to provide the required flight characteristics.

Under normal operating conditions a direct fluid connection is made between the ports 8B and 8A of the overspeed speed servo valve. Therefore high pressure fluid is supplied via the lines 10 and 13 directly to the line 14, and no fluid will be supplied to the line 18 via the port 8D.

Fluid is, therefore, supplied to the lines 15 and 16, with the non return valve 17 preventing fluid flow along the line 16. The fluid passes along the line 15 to the port 7B of the constant speed servo valve 7.

The spool member B1 of the constant speed servo valve 7 is then controlled to balance the flow of fluid to the fine and coarse sides of the beta valve assembly 1.

By altering the balance of fluid flow to the ports 7A and 7C of the constant speed servo valve, the balance of fluid pressure is controlled, and the pitch of the propeller blade system thereby controlled.

Under normal operating conditions the propeller blades are moved to feather/maximum coarse pitch by signalling the constant speed servo valve 7 to drive coarse thus communicating the port 7B with the port 7C and communicating the port 7A with the port 7D. High pressure fluid is, therefore, supplied to the coarse pitch side of the beta valve assembly and the fine pitch side is connected to drain, which results in the propeller blades moving to feather.

Normally the propeller blades are moved out of feather by signalling the constant speed servo valve 7 to drive fine thus communicating the port 7B with the port 7A and, the port 7C with the port 7D respectively. High pressure fluid is, therefore, of the constant speed servo valve 7 supplied to fine pitch side of the beta valve assembly and the coarse pitch side connected to drain which results in the propeller moving out of feather.

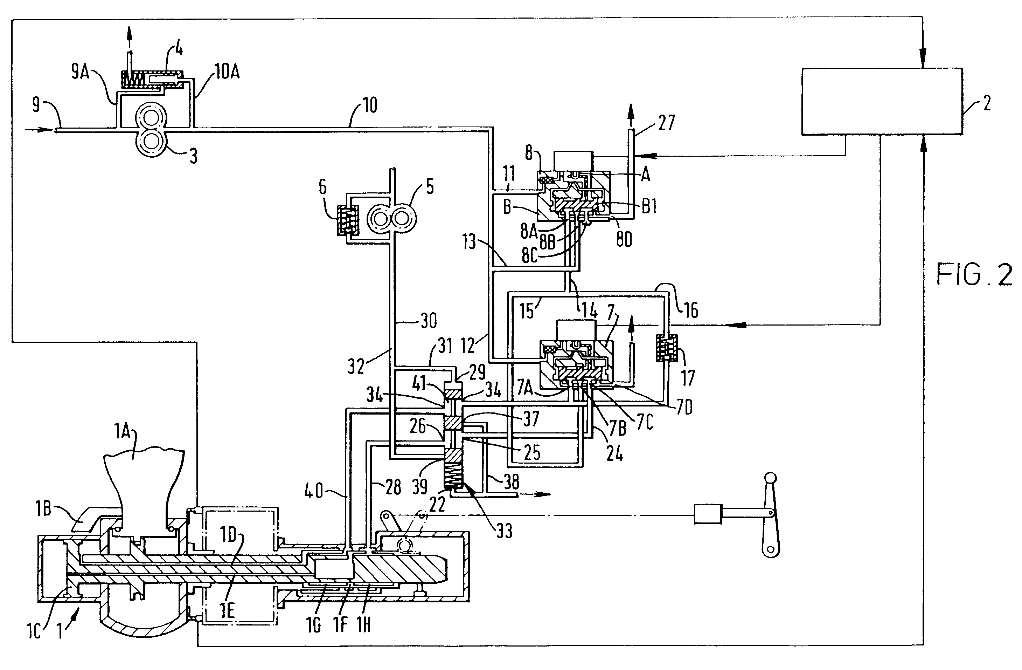

Figure 2 shows a similar propeller blade pitch control system to that shown in Figure 1. Therefore like numerals/references have been used to denote like components.

The system is identical to that of Figure 1 except in relation to shuttle valve 23 and the connections therefor and operation thereof.

In this embodiment the shuttle valve 23 is replaced by a three staged spool valve 33.

The port 8D of the overspeed servo valve 8 is connected directly to drain. Therefore line 18, non return valve 19 and non return valve 20 are no longer required.

The gear pump 5 has an output line 30 which connects to a port 29 of the spool valve 33 by means of a branch line 31 and to a port 39 of the spool valve 33 by means of a branch line 32.

The port 7A, and therefore the line 16, is connected to a port 34 of the spool valve 33 and the port 7C is connected by the line 24 to a port 25 of the spool valve 33.

A line 40 from a first chamber 41 of the spool valve 33 to the fine side of the assembly 1, is connected to passageway 1G via a port 36, and the line 28 from a second chamber, to the coarse side of assembly 1, is connected to passageway 1H via a port 26.

The spool valve 33 is provided with a drain line 38 via ports 22 and 37.

Under normal operating conditions a direct connection is made between the ports 8B and 8A of the overspeed servo valve 8. Therefore high pressure fluid is supplied via the lines 10 and 13 directly to the line 14.

Fluid is, therefore, supplied to the lines 15 and 16, with the non return valve 17 preventing fluid flow along the line 16. The fluid passes along the line 15 to the port 7B of the constant speed servo valve 7.

The spool member B1 of the constant speed servo valve 7 is then controlled to balance the flow of fluid to the fine and coarse sides of the beta valve assembly 1.

By altering the balance of fluid flow to the ports 7A and 7C, the balance of fluid pressure is controlled, and the pitch of the propeller blade system thereby controlled.

Under normal operating conditions the propeller blades are moved to feather/maximum coarse pitch by signalling the constant speed servo valve 7 to drive coarse thus communicating the port 7B with the the port 7C and communicating the port 7A with the port 7D. High pressure fluid is, therefore, supplied to the coarse pitch side of the beta valve assembly and the fine pitch side connected to drain which results in the propeller blades moving to feather.

Normally the propeller blades are moved out of feather by signalling the constant speed servo valve 7 to drive fine thus communicating the port 7B with the port 7A and the 7C with the port 7D respectively. High pressure fluid is, therefore supplied to the fine pitch side of the beta valve assembly and the coarse pitch side is connected to drain which results in the propeller moving out of feather.

The failure mode operation of the systems shown in Figures 1 and 2 are substantially identical to one another. Therefore the following description applies to both systems.

In the event of failure resulting in an overspeed situation the microprocessor 2 controls the overspeed servo valve 8 so as to move the spool member B1 so that the port 8A is in communication with the port 8D and the port 8B is in communication with the port 8C. Thus high pressure fluid is cut-off from the constant speed servo valve 7 and, hence to both the fine and coarse sides of the beta valve assembly 1 so as to enable the counterweights to move the propeller blades to a coarser pitch reducing the overspeed.

In the event of a failure preventing feathering of the propeller blades by means of the constant speed servo valve 7 the gear pump 5 is activated. Operation of the pump 5 increases the fluid pressure in the lines 30, 31, 32 and results in the shuttle valve 23/spool valve 33 moving so as to respectively communicate port 22 to port 26 and, port 39 to port 26 with port 34 to drain line 38. Therefore fluid from the pump 5 connects to the coarse pitch side of the beta valve assembly 1 with the fine pitch side of the beta valve assembly being connected to drain, resulting in the propeller blades moving to feather.

With the system the blade pitch system carries the further advantage of being able to set the propeller blades to a minimum drag position in the event of an engine failure. This can be achieved by any one of the following three methods:-
1. Command the overspeed servo valve 8 to cut-off fluid pressure from line 14 i.e. communicate port 8A with 8D. The fluid pressures within the beta valve assembly will therefore drop to drain pressure. The force generated by the counterweights will move the blades coarse until an equilibrium condition is achieved. If the counterweights are phased correctly this equilibrium condition will be near or at the blade angle required for minimum drag.
2. The microprocessor 2 may be set to drive the propeller at a predetermined speed. This speed would preferably be set to give the minimum drag for that flight condition.
3. If the system is fitted with a sensor that can determine the propeller blade pitch the microprocessor 2 may be set to move the propeller blades to the angle of minimum drag for that flight condition.

## Claims

1. A blade pitch control system for use with a propeller system having one or more propellers including a constant speed valve (7) and an overspeed valve (8), the operation of the constant speed valve being controlled by a computer means (2) and the system being characterised in that operation of the overspeed valve (8) is also controlled by the computer means (2) and means (1B) is provided to automatically set the propeller blades (1A,2) to a non-fully feathered minimum drag position in which each propeller rotates in the airflow so as to provide minimum drag characteristics in the event of a malfunction.

2. A blade pitch control system as claimed in claim 1, where in the overspeed valve is a hydraulic mechanical valve (8).

3. A blade pitch control system as claimed in claim 1 or 2, wherein the constant speed valve (7) and the overspeed valve (8) are servo valves.

4. A blade pitch control system as claimed in claim 3, wherein the servo valves (7,8) are two stage servo valves.

5. A blade pitch control system as claimed in claim 3 or claim 4, wherein the servo valves (7,8) are electrically operated.

6. A blade pitch control system as claimed in any one of the preceding claims, wherein the computer means (2) is an analogue computer.

7. A blade pitch control system as claimed in any one of claims 1 to 5, wherein the computer means (2) is a digital computer.

8. A blade pitch control system as claimed in any one of claims 1 to 5 or 7, wherein the computer means (2) is a microprocessor.

9. A blade pitch control system as claimed in any one of the preceding claims, wherein the system further includes a blade pitch control valve (1).

## Patentansprüche

1. Blatteinstellwinkel-Steuerungssystem zur Verwendung bei einem Luftschraubensystem mit einer oder mehreren Luftschrauben, das ein Konstantdrehzahlventil (7) und ein Überdrehzahlventil (8) beinhaltet, wobei der Betrieb des Konstantdrehzahlventils durch eine Computereinrichtung (2) gesteuert ist und das System dadurch gekennzeichnet ist, daß der Betrieb des Überdrehzahlventils (8) ebenfalls durch die Computereinrichtung (2) gesteuert ist und ein Mittel (1B) vorgesehen ist, um die Luftschraubenblätter (1A, 2) in eine nicht völlig der Segelstellung entsprechende Stellung für Kleinstschub einzustellen, in der jede Luftschraube sich in dem Luftstrom so dreht, daß sie im Falle einer Funktionsstörung geringste Schubeigenschaften zur Verfügung stellt.

2. Blatteinstellwinkel-Steuerungssystem nach Anspruch 1, bei dem das Überdrehzahlventil ein hydromechanisches Ventil (8) ist.

3. Blatteinstellwinkel-Steuerungssystem nach Anspruch 1 oder 2, bei dem das Konstantdrehzahlventil (7) und das Überdrehzahlventil (8) Servoventile sind.

4. Blatteinstellwinkel-Steuerungssystem nach Anspruch 3, bei dem die Servoventile (7, 8) zweistufige Servoventile sind.

5. Blatteinstellwinkel-Steuerungssystem nach Anspruch 3 oder 4, bei dem die Servoventile (7, 8) elektrisch betätigt sind.

6. Blatteinstellwinkel-Steuerungssystem nach irgendeinem der vorausgehenden Ansprüche, bei dem die Computereinrichtung (2) ein Analogrechner ist.

7. Blatteinstellwinkel-Steuerungssystem nach irgendeinem der Ansprüche 1 bis 5, bei dem die Computereinrichtung (2) ein Digitalrechner ist.

8. Blatteinstellwinkel-Steuerungssystem nach einem der Ansprüche 1 bis 5 oder 7, bei der die Computereinrichtung (2) ein Mikroprozessor ist.

9. Blatteinstellwinkel-Steuerungssystem nach irgendeinem der vorausgehenden Ansprüche, bei dem das System außerdem ein Blatteinstellwinkel-Steuerventil (1) beinhaltet.

## Revendications

1. Système de commande de pas de paie à utiliser avec un système d'hélice ayant une ou plusieurs hélices, comportant une soupape de vitesse constante (7) et une soupape de survitesse (8), le fonctionnement de la soupape à vitesse constante étant commandé par des moyens de calcul (2), caractérisé en ce que le fonctionnement de la soupape de survitesse (8) est aussi commandé par les moyens de calcul (2) et des moyens (1B) sont prévus pour positionner automatiquement les pales d'hélice (1A, 2) dans une position de traînée minimum, pas complètement en drapeau, dans laquelle chaque hélice tourne dans le courant d'air de manière à donner des caractéristiques de traînée minimum dans le cas d'un mauvais fonctionnement.

2. Système de commande de pas d'hélice selon la revendication 1, caractérisé en ce que la soupape de survitesse est une soupape mécanique hydraulique (8).

3. Système de commande de pas d'hélice selon la revendication 1 ou 2, caractérisé en ce que la soupape de vitesse constante (7) et la soupape de survitesse (8) sont des servosoupapes.

4. Système de commande de pas d'hélice selon la revendication 3, caractérisé en ce que les servosoupapes (7, 8) sont des servosoupapes à deux étages.

5. Système de commande de pas d'hélice selon la revendication 3 ou 4, caractérisé en ce que les servosoupapes (7, 8) sont manoeuvrées électriquement.

6. Système de commande de pas d'hélice selon l'une quelconque des revendications précédentes, caractérisé en ce que les moyens de calcul (2) sont un ordinateur analogique.

7. Système de commande de pas d'hélice selon l'une quelconque des revendications 1 à 5, caractérisé en ce que les moyens de calcul (2) sont un ordinateur numérique.

8. Système de commande de pas d'hélice selon l'une quelconque des revendications 1 à 5 ou 7, caractérisé en ce que les moyens de calcul (2) sont un microprocesseur.

9. Système de commande de pas d'hélice selon l'une quelconque des revendications précédentes, caractérisé en ce que le système comporte en outre une soupape de commande de pas d'hélice (1).
